# EUROPEAN PATENT APPLICATION

(11) **EP 4 529 075 A1**
(43) Date of publication of application: **26.03.2025**
(21) Application number: 22949292.1
(22) Date of filing: 28.06.2022
(51) Int. Cl.: H04L 7/00

(54) **RELAY DEVICE, RELAY METHOD, RELAY PROGRAM, AND TIME SYNCHRONIZATION SYSTEM**

(71) Applicant: MITSUBISHI ELECTRIC CORPORATION, Chiyoda-ku Tokyo 100-8310 (JP)
(72) Inventor: TOMISAWA, Toshiaki, Tokyo 100-8310 (JP); SAKAGUCHI, Naotaka, Tokyo 100-8310 (JP)
(74) Representative: Pfenning, Meinig & Partner mbB
(86) International application number: PCT/JP2022/025670
(87) International publication number: WO 2024/004014

(57) **Abstract**

A relay device (10A, 10D) receives time synchronization messages in a plurality of time synchronization networks (101A, 101B) using different time synchronization profiles. The relay device (10A, 10D) selects a grandmaster for use in time synchronization from grandmasters (102A, 102B) in the plurality of time synchronization networks (101A, 101B) based on the time synchronization messages in the plurality of time synchronization networks (101A, 101B).

## Description

### Technical Field

The present disclosure relates to a technology for performing time synchronization.

### Background Art

In recent years, high-precision time synchronization is desired in various fields. A technology as a base for high-precision time synchronization is IEEE 1588 (refer to Non-Patent Literature 1).

In IEEE 1588, a device for transferring time information has a master-slave structure. From a grandmaster serving as a clock source, time information is supplied. The time information is sequentially transferred from a master-side device to a slave-side device. In each device, a time synchronization profile is set. Following the set time synchronization profile, each device performs time synchronization with the grandmaster based on the time information.

In IEEE 1588, an Announce message is transmitted for each domain number. Then, the best grandmaster as a result of parameter comparison in Announce message is selected as a clock source. Here, with a BMCA algorithm, the best grandmaster is selected as a clock source. BMCA is an abbreviation of Best Master Clock Algorithm.

Depending on the field, the stipulations of IEEE 1588 themselves are not used. Instead, the stipulations of a time synchronization profile obtained by expanding the stipulations of IEEE 1588 to that field are used. Examples are a Telecom profile (ITUG8275.1 (refer to Non-Patent Literature 2)) for 5G and IEEE 802.1AS (refer to Non-Patent Literature 3) for industry. 5G is an abbreviation of 5 Generation.

In Patent Literature 1, a time synchronization process based on a single time synchronization profile is described. In Patent Literature 1, a relay device filters only a time synchronization packet based on a time synchronization profile for transfer to a time synchronization part, performs time synchronization calculation, and generates and transmits a time synchronization packet.

### Citation List

### Patent Literature

Patent Literature 1: JP 2021-93681

### Non-Patent Literature

Non-Patent Literature 1: IEEE 1588-2019 IEEE Standard for a Precision Clock Synchronization Protocol for Networked Measurement and Control Systems, P.161, P.217, P.223
Non-Patent Literature 2: ITU-T G.8275.1/Y.1369.1 Amendment 2 (06/2021), Precision time protocol telecom profile for phase/time synchronization with full timing support from the network, Amendment 2, P.14, P.16, P.23
Non-Patent Literature 3: IEEE Std 802.1ASTM-2020 Timing and Synchronization for Time Sensitive Applications, PP.54-57

### Summary of Invention

### Technical Problem

A general outline of the time synchronization process is described in Non-Patent Literature 1. However, as described in Non-Patent Literatures 2 and 3, the time synchronization process may be stipulated by a unique time synchronization profile in accordance with the field. Furthermore, different time synchronization profiles are not compatible with each other. Thus, it is required to construct a time synchronization network for each time synchronization profile.

For example, it is assumed that a time synchronization network of a time synchronization profile A is laid in an area X. It is assumed that a communication scheme or application where a different time synchronization profile B is required is introduced to the area X. The communication scheme or application where the different time synchronization profile B is required cannot use the time synchronization profile A. For this reason, it is required to extend the existing time synchronization network of the time synchronization profile B to the area X or additionally set an expensive grandmaster supporting the time synchronization profile B for the area X.

Note that, in general, the grandmaster is supplied with time from GPS or the like. Thus, the setting location of the grandmaster is restricted. If a grandmaster is additionally set for the area X, cost increases and monitoring operation is performed also for the area X, thereby increasing maintenance cost.

An object of the present disclosure is to make a time synchronization network efficiently constructible when a plurality of time synchronization networks using different time synchronization profiles are present.

### Solution to Problem

A relay device according to the present disclosure includes:
a receiving part to receive time synchronization messages in a plurality of time synchronization networks using different time synchronization profiles; and
an interprofile selecting part to select a grandmaster for use in time synchronization from grandmasters in the plurality of time synchronization networks based on the time synchronization messages in the plurality of time synchronization networks received by the receiving part.

### Advantageous Effects of Invention

In the present disclosure, from grandmasters in a plurality of time synchronization networks, a grandmaster for use in time synchronization is selected. This allows the grandmaster to be shared and used between time synchronization networks using different time synchronization profiles. As a result, when a plurality of time synchronization networks using different time synchronization profiles are present, it is possible to efficiently construct a time synchronization network.

### Brief Description of Drawings

Fig. 1 is a diagram of the structure of a time synchronization system 100 according to Embodiment 1.
Fig. 2 is a diagram of the structure of a relay device 10 according to Embodiment 1.
Fig. 3 is a flowchart of a process at the time of PTP frame reception according to Embodiment 1.
Fig. 4 is a flowchart of a PTP protocol identification process according to Embodiment 1.
Fig. 5 is a diagram for describing a header of a PTP frame.
Fig. 6 is a diagram for describing a body portion of an Announce message.
Fig. 7 is a flowchart of an interprofile selection process according to Embodiment 1.
Fig. 8 is a diagram for describing items for use at the time of selection of a grandmaster 102.
Fig. 9 is a flowchart of a transmission process according to Embodiment 1.
Fig. 10 is a diagram of the structure of the relay device 10 according to Modification 1.
Fig. 11 is a diagram of the structure of the time synchronization system 100 according to Embodiment 2.
Fig. 12 is a flowchart of a process at the time of PTP frame reception according to Embodiment 2.
Fig. 13 is a diagram of the structure of the time synchronization system 100 according to Embodiment 3.
Fig. 14 is a flowchart of a process at the time of PTP frame reception according to Embodiment 3.

### Description of Embodiments

### Embodiment 1.

### ***Description of structure***

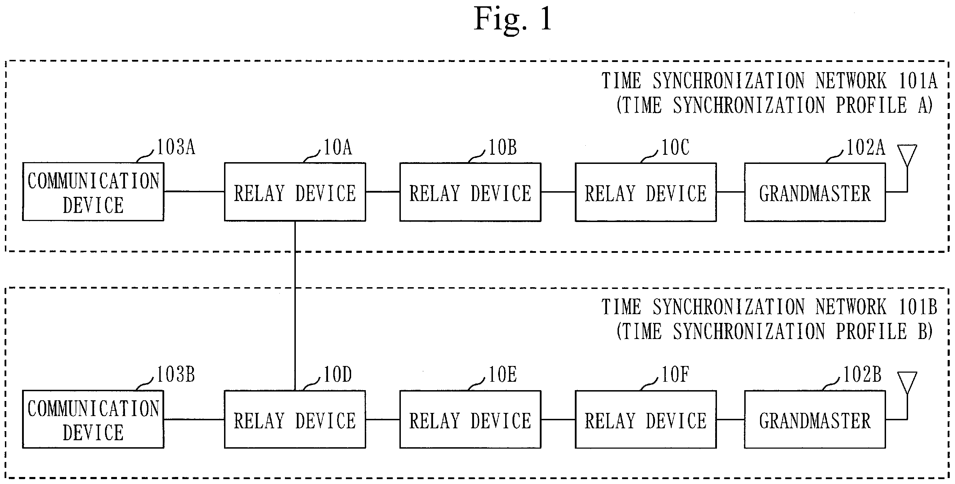

With reference to Fig. 1, the structure of a time synchronization system 100 according to Embodiment 1 is described.

The time synchronization system 100 includes a plurality of time synchronization networks 101. Each time synchronization network 101 uses a different time synchronization profile. In Fig. 1, as the time synchronization networks 101, a time synchronization network 101A and a time synchronization network 101B are illustrated. In the time synchronization network 101A, a time synchronization profile A is used. In the time synchronization network 101B, a time synchronization profile B is used.

Each time synchronization network 101 includes a grandmaster 102, one or more relay devices 10, and one or more communication devices 103. In Fig. 1, the time synchronization network 101A includes a grandmaster 102A, relay devices 10A, 10B, and 10C, and a communication device 103A. The time synchronization network 101B includes a grandmaster 102B, relay devices 10D, 10E, and 10F, and a communication device 103B.

In the time synchronization system 100, the relay devices 10 in the time synchronization networks 101 are partially connected together. In Fig. 1, the relay device 10A in the time synchronization network 101A and the relay device 10D in the time synchronization network 101B are connected together.

In the time synchronization network 101A, the grandmaster 102A, the relay devices 10A, 10B, and 10C, and the communication device 103A transmit and receive a PTP frame along the time synchronization profile A. Also, the relay device 10A transfers, to the relay device 10D, a PTP frame including information about the time synchronization profile A.

In the time synchronization network 101B, the grandmaster 102B, the relay devices 10D, 10E, and 10F, and the communication device 103A transmit and receive a PTP frame along the time synchronization profile B. Also, the relay device 10D transfers, to the relay device 10A, a PTP frame including information about the time synchronization profile B.

Here, the PTP frame is a time synchronization message.

The relay device 10A and the relay device 10D determine which time synchronization profile the PTP frame is along. The relay device 10A and the relay device 10D extract determination information of the grandmaster 102 from the PTP frame. The relay device 10A and the relay device 10D compare the determination information between the different time synchronization profiles, and selects the grandmaster 102 for use from the grandmasters 102 in the plurality of time synchronization networks 101. The relay device 10A and the relay device 10D transfer the determination information of the selected grandmaster 102.

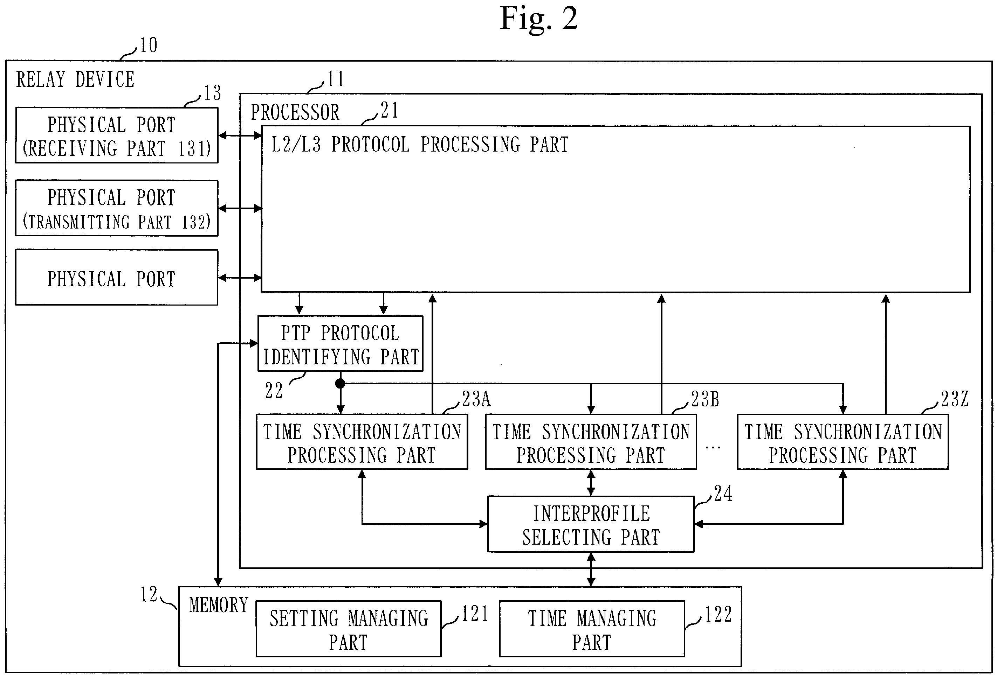

With reference to Fig. 2, the structure of the relay device 10 according to Embodiment 1 is described.

The relay device 10 is a computer.

The relay device 10 includes hardware including a processor 11, a memory 12, and a plurality of physical ports 13. The processor 11 is connected to other pieces of hardware via signal lines to control these other pieces of hardware.

The processor 11 is an IC for performing processing. IC is an abbreviation of Integrated Circuit. The processor 11 is, as a specific example, a CPU. CPU is an abbreviation of Central Processing Unit.

The memory 12 is a storage device for storing data. The memory 12 is, as a specific example, an SRAM or DRAM. SRAM is an abbreviation of Static Random Access Memory. DRAM is an abbreviation of Dynamic Random Access Memory. The memory 12 achieves the functions of a setting managing part 121 and a time managing part 122. The setting managing part 121 manages a time synchronization profile and so forth. The time managing part 122 manages time in the relay device 10.

The physical ports 13 are wired LAN ports. LAN is an abbreviation of Local Area Network. The physical ports 13 each achieve the function of a receiving part 131 and a transmitting part 132. The receiving part 131 receives a PTP frame from outside. The transmitting part 132 transmits a PTP frame to outside.

The relay device 10 includes, as functional components, an L2/L3 protocol processing part 21, a PTP protocol identifying part 22, a plurality of time synchronization processing parts 23, and an interprofile selecting part 24. The function of each functional component of the relay device 10 is achieved by software. In each functional component, a time synchronization profile and so forth stored in the setting managing part 121 are set.

In the memory 12, a program for achieving the function of the functional component of the relay device 10 is stored. This program is read by the processor 11 for execution. This achieves the function of the functional component of the relay device 10.

The L2/L3 protocol processing part 21 is a function of terminating a protocol. The PTP protocol identifying part 22 is a function of identifying a PTP protocol. The time synchronization processing part 23 is a function for performing time synchronization process. The time synchronization processing part 23 is provided so as to correspond to each time synchronization profile managed by the setting managing part 121 and performs time synchronization process along the corresponding time synchronization profile based on the PTP frame. The time synchronization process includes processes such as delay calculation, time distribution, and BMCA determination stipulated in each time synchronization profile as described in Non-Patent Literatures 1, 2, and 3. The interprofile selecting part 24 is a function of selecting a grandmaster for use in time synchronization from the grandmasters in the plurality of time synchronization networks using different time synchronization profiles.

In Fig. 2, only one processor 11 is illustrated. However, a plurality of processors 11 may be provided, and the plurality of processors 11 may execute the program for achieving each function in a coordinated fashion.

### ***Description of operation***

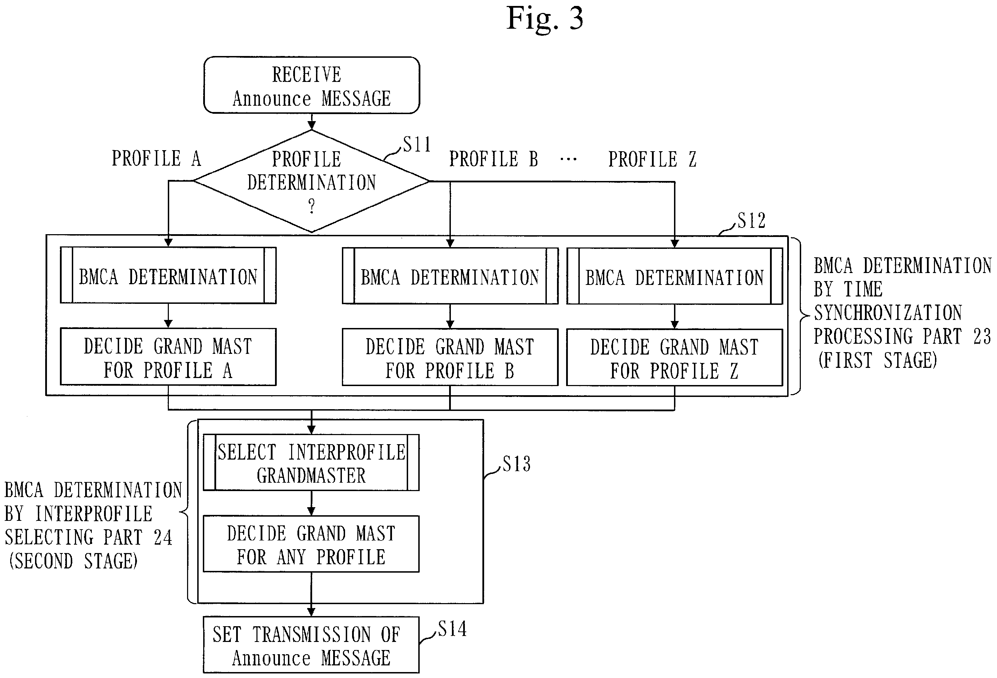

With reference to Fig. 3 to Fig. 9, the operation of the relay device 10 according to Embodiment 1 is described.

The operation procedure of the relay device 10 according to Embodiment 1 corresponds to a relay method according to Embodiment 1. Also, a program achieving the operation of the relay device 10 according to Embodiment 1 corresponds to a relay program according to Embodiment 1.

Here, as the relay devices 10A and 10D in Fig. 1, the operation of the relay device 10 to which another time synchronization network 101 is connected is described. Another relay device 10 (relay device 10B, 10C, 10E, 10F) operates operation similar to that in the conventional technology.

With reference to Fig. 3, the process at the time of PTP frame reception according to Embodiment 1 is described.

In particular herein, a process at the time of reception of an Announce message, which is one type of PTP frame, is described. In Non-Patent Literatures 1, 2, and 3, a BMCA determination is made when an Announce message is received, and the grandmaster 102 for use is decided. The relay device 10 according to Embodiment 1 performs a BMCA determination in two stages.

### (Step S11: PTP protocol identification process)

A PTP frame received by the receiving part 131 is inputted via the L2/L3 protocol processing part 21 to the PTP protocol identifying part 22.

The PTP protocol identifying part 22 identifies which time synchronization profile the inputted Announce message is along among the plurality of time synchronization profiles. The PTP protocol identifying part 22 inputs the Announce message to the time synchronization processing part 23 corresponding to the identified time synchronization profile.

### (Step S12: Time synchronization process)

The time synchronization processing part 23 with the Announce message inputted thereto at step S11 makes a BMCA determination along the corresponding time synchronization profile. For example, the time synchronization processing part 23 corresponding to the time synchronization profile stipulated in Non-Patent Literature 1 makes a BMCA determination stipulated in Non-Patent Literature 1. The time synchronization processing part 23 corresponding to the time synchronization profile stipulated in Non-Patent Literature 2 makes a BMCA determination stipulated in Non-Patent Literature 2. The time synchronization processing part 23 corresponding to the time synchronization profile stipulated in Non-Patent Literature 3 makes a BMCA determination stipulated in Non-Patent Literature 3.

With the process at step S12, the grandmaster 102 for use in the time synchronization profile is selected. That is, the best grandmaster 102 in the time synchronization profile is selected.

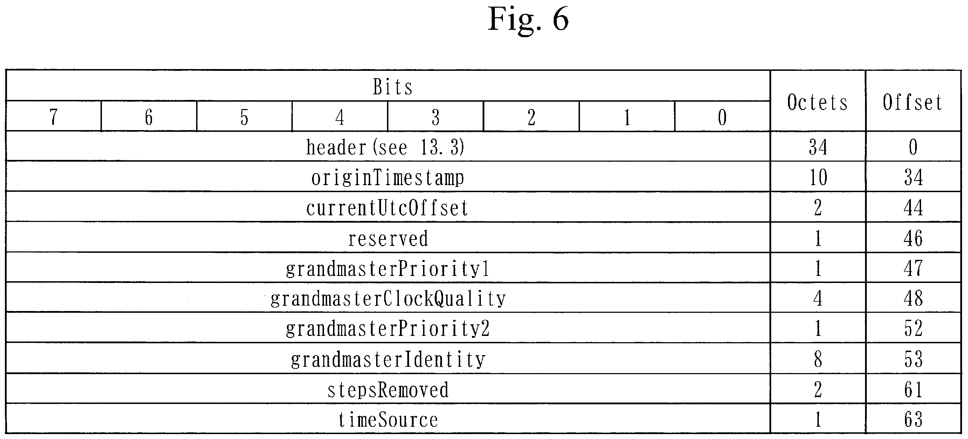

As described with reference to Fig. 1, to each of the relay devices 10A and 10D, not only the PTP frame in the time synchronization network 101 to which the relay device belongs but also the PTP in the different time synchronization network 101 are transmitted. Therefore, when the process of Fig. 6 is repeatedly performed, the receiving part 131 receives, at step S11, an Announce message in each of the plurality of time synchronization networks using different time synchronization profiles. As a result, with the process at step S12, the grandmaster 102 for use for each time synchronization profile is selected. In other words, for each time synchronization network 101 using a different time synchronization profile, the grandmaster 102 for use is selected. In Fig. 1, the grandmaster 102 for use in each of the time synchronization networks 101A and 101B is selected.

### (Step S13: Interprofile selection process)

Based on the Announce messages in the plurality of time synchronization networks using different time synchronization protocols, the interprofile selecting part 24 selects the grandmaster 102 for use from the grandmasters 102 selected for the respective time synchronization profiles at step S12. That is, the interprofile selecting part 24 selects the best grandmaster 102 from the grandmasters 102 selected in the plurality of time synchronization profiles.

### (Step S14: Transmission process)

Based on the grandmaster 102 selected at step S13, the interprofile selecting part 24 sets transmission of an Announce message along each time synchronization profile. Then, the interprofile selecting part 24 notifies the time synchronization processing part 23 of the transmission-set Announce message. The time synchronization processing part 23 as a notification destination is the time synchronization processing part 23 corresponding to the time synchronization profile identified at step S11.

Then, by following the corresponding time synchronization profile, the notified time synchronization processing part 23 transmits the Announce message via the transmitting part 132.

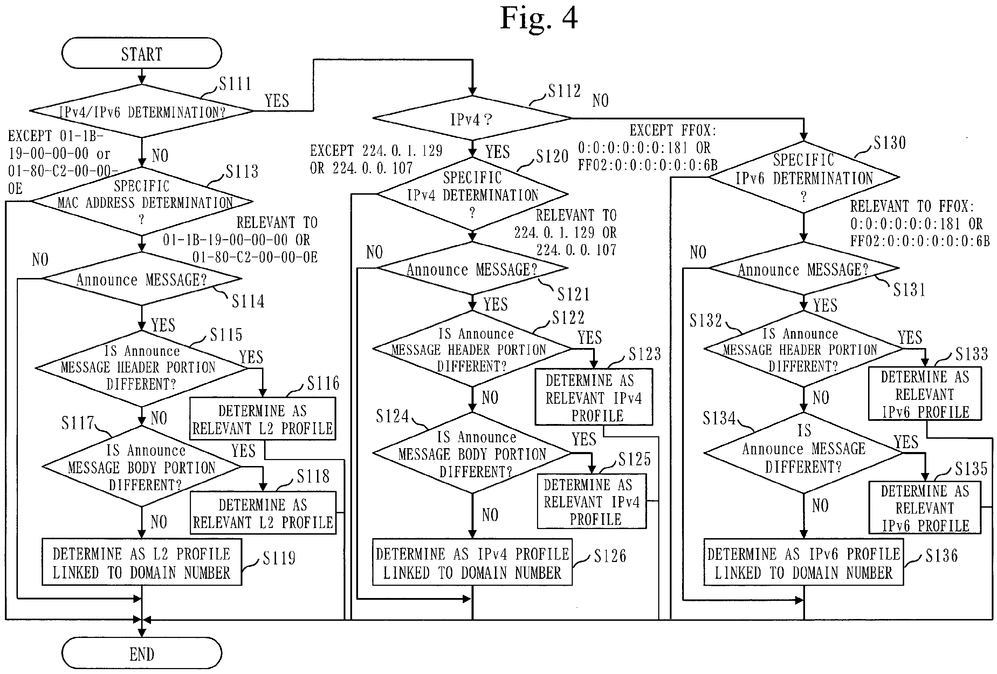

With reference to Fig. 4, the PTP protocol identification process (step S11 of Fig. 3) according to Embodiment 1 is described.

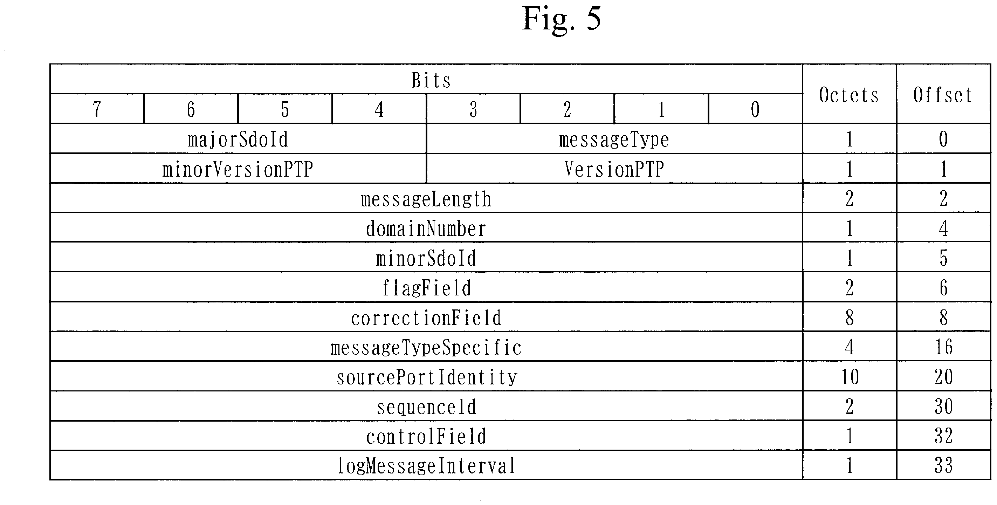

Here, the header of the PTP frame is defined as in Fig. 5 in Non-Patent Literature 1. Also, the body of the Announce message is defined as in Fig. 6 in Non-Patent Literature 1.

At step S111 and step S112, the PTP protocol identifying part 22 makes a determination as to an IPv4 address, an IPv6 address, and a multicast MAC address. IP is an abbreviation of Internet Protocol. MAC is an abbreviation of Media Access Control.

Specifically, at step S111, based on the value of the Ethertype field of the received frame, the PTP protocol identifying part 22 determines whether the address is an IPv4 address or IPv6 address. When the address is an IPv4 address or IPv6 address, the PTP protocol identifying part 22 causes the process proceed to step S112. On the other hand, when the address is neither an IPv4 address nor IPv6 address, the PTP protocol identifying part 22 causes the process proceed to step S113.

At step S112, based on the value of the Ethertype field of the received frame, the PTP protocol identifying part 22 determines whether the address is an IPv4 address or IPv6 address. When the address is an IPv4 address, the PTP protocol identifying part 22 causes the process to proceed to step S120. On the other hand, when the address is an IPv6 address, the PTP protocol identifying part 22 causes the process to proceed to step S130.

Here, the Ethertype field has an area of two bytes. For example, in Non-Patent Literatures 1 and 3, Ethertype is defined as 88F7. For IPv4, the value is 0800. For IPv6, the value is 86DD.

The case of a multicast MAC address is described.

At step S113, the PTP protocol identifying part 22 determines whether the MAC address is a specific address.

Specifically, the PTP protocol identifying part 22 determines whether the MAC address is relevant to an address (01-1B-19-00-00-00 or 01-80-C2-00-00-0E) defined in Non-Patent Literature 1. When it is relevant, the PTP protocol identifying part 22 causes the process to proceed to step S114. On the other hand, when it is not relevant, the PTP protocol identifying part 22 ends the process of Fig. 3.

At step S114, the PTP protocol identifying part 22 determines whether the received frame is an Announce message.

Specifically, from a message type (messageType) of a common header of the PTP, the PTP protocol identifying part 22 determines whether the frame is an Announce message. When it is an Announce message, the message type is 0xB. When it is an Announce message, the PTP protocol identifying part 22 causes the process to proceed to step S115. On the other hand, when it is not an Announce message, the PTP protocol identifying part 22 causes the process of Fig. 3 to end.

At step S115, the PTP protocol identifying part 22 checks a difference in the header portion of the Announce message.

Specifically, the PTP protocol identifying part 22 takes the header portion of the Announce message illustrated in Fig. 5 as a reference. The PTP protocol identifying part 22 determines whether the header portion of the received Announce message is different from the header portion as a reference. When it is different, the PTP protocol identifying part 22 causes the process to proceed to step S116. On the other hand, when it is not different, the PTP protocol identifying part 22 causes the process to step S117.

At step S116, the PTP protocol identifying part 22 extracts, from the header portion of the received Announce message, a value of a portion different from the header portion as a reference. The PTP protocol identifying part 22 makes a comparison between the extracted value and a unique value defined in each time synchronization profile. The PTP protocol identifying part 22 specifies a time synchronization profile of L2 where the unique value matching the extracted value is defined. L2 is an abbreviation of Layer 2. The PTP protocol identifying part 22 identifies that the received Announce message is the Announce message along the specified time synchronization profile of L2.

The unique value in the header portion of the Announce message is a value matching a unique condition defined in the profile. The unique value is, as a specific example, the version of each profile, a range of value of domain numbers, or the like.

At step S117, the PTP protocol identifying part 22 checks a difference in the body portion of the Announce message.

Specifically, the PTP protocol identifying part 22 takes the body portion of the Announce message illustrated in Fig. 6 as a reference. The PTP protocol identifying part 22 determines whether the body portion of the received Announce message is different from the body portion as a reference. When it is different, the PTP protocol identifying part 22 causes the process to proceed to step S118. On the other hand, when it is not different, the PTP protocol identifying part 22 causes the process to step S119.

At step S118, the PTP protocol identifying part 22 extracts, from the body portion of the received Announce message, a value of a portion different from the body portion as a reference. The PTP protocol identifying part 22 makes a comparison between the extracted value and a unique value defined in each time synchronization profile. The PTP protocol identifying part 22 specifies a time synchronization profile of L2 where the unique value matching the extracted value is defined. The PTP protocol identifying part 22 identifies that the received Announce message is the Announce message along the specified time synchronization profile of L2.

The unique value in the body part of the Announce message is a value of a portion expanded in the time synchronization profile. For example, in ITU-T G8275.1 of Non-Patent Literature 2, grandmasterPriority1 is not used and 128 fixed is defined. When this value matches, ITU-T G8275.1 is determined. Also, in IEEE 802.1AS-2020 of Non-Patent Literature 3, the value of path trace TLV as an option is defined. When this value matches, IEEE 802.1AS-2020 is determined.

At step S119, the time synchronization profile of L2 linked to a domain number is specified. Here, it is assumed that a domain number is set in advance for each time synchronization profile of L2.

The process in the case of IPv4 is described.

At step S120, the PTP protocol identifying part 22 determines whether the IP address is a specific address.

Specifically, the PTP protocol identifying part 22 determines whether the IP address is relevant to an address (224.0.1.129 or 224.0.0.107) defined in Non-Patent Literature 1. When it is relevant, the PTP protocol identifying part 22 causes the process to proceed to step S121. On the other hand, when it is not relevant, the PTP protocol identifying part 22 causes the process of Fig. 3 to end.

The processes at step S121 to step S126 are identical to the processes at step S113 to step S119. However, not a time synchronization profile of L2 but a time synchronization profile of IPv4 is specified.

The process in the case of IPv6 is described.

At step S130, the PTP protocol identifying part 22 determines whether the IP address is a specific address.

Specifically, the PTP protocol identifying part 22 determines whether the IP address is relevant to an address (FF0X:0:0:0:0:0:0:181 or FF02:0:0:0:0:0:0:6B) defined in Non-Patent Literature 1. When it is relevant, the PTP protocol identifying part 22 causes the process to proceed to step S131. On the other hand, when it is not relevant, the PTP protocol identifying part 22 causes the process of Fig. 3 to end.

The processes at step S131 to step S136 are identical to the processes at step S113 to step S119. However, not a time synchronization profile of L2 but a time synchronization profile of IPv6 is specified.

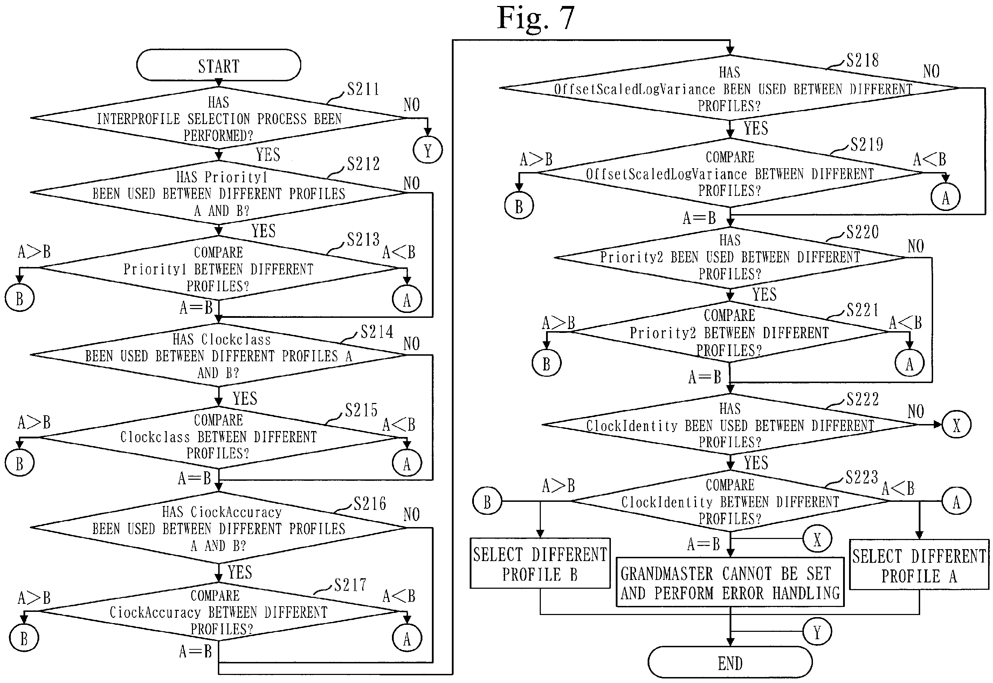

With reference to Fig. 7, the interprofile selection process (step S13 of Fig. 3) according to Embodiment 1 is described.

In the interprofile selection process, the interprofile selecting part 24 selects which of the grandmaster 102 currently selected or the grandmaster 102 newly selected at step S12 is to be taken as the grandmaster 102 for use. Here, the time synchronization profile corresponding to the grandmaster 102 currently selected is taken as a time synchronization profile A. The time synchronization profile corresponding to the grandmaster 102 newly selected at step S12 is taken as a time synchronization profile B.

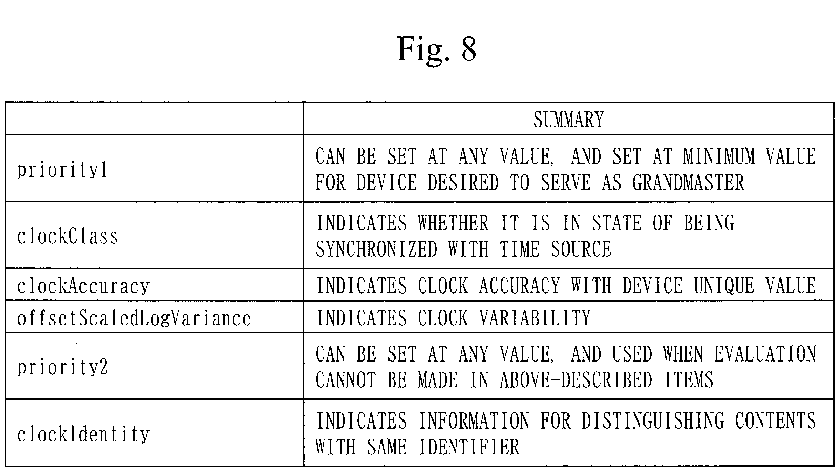

In Non-Patent Literature 1, the grandmaster 102 for use is selected based on the items illustrated in Fig. 8. In the interprofile selection process, the interprofile selecting part 24 makes comparisons as to the items illustrated in Fig. 8 in descending order of priority to select the grandmaster 102 for use.

However, a value to be referred to in BMCA determination or a selecting method may be varied depending on the time synchronization profile. For example, in ITU-T G8275.1 of Non-Patent Literature 2, BMCA determination is redefined with 6.3.7 Data set comparison algorithm. Here, grandmasterPriority1 is not used. Similarly, in IEEE 802.1AS-2020 of Non-Patent Literature 3, BMCA determination is redefined with 10.3.2 systemIdentity.

Thus, the interprofile selecting part 24 does not make a comparison for an item not used for selecting the grandmaster 102 in at least any time synchronization profile as a comparison target.

At step S211, the interprofile selecting part 24 determines whether the interprofile selection process is required. For example, the interprofile selection process is not required when only single time synchronization profile is managed by the setting managing part 121.

When the interprofile selection process is required, the interprofile selecting part 24 causes the process to proceed to step S212. On the other hand, when the interprofile selection process is not required, the interprofile selecting part 24 causes the process to end. When the interprofile selection process is not required, the grandmaster 102 selected at step S12 is decided as the grandmaster 102 for use.

At step S212, the interprofile selecting part 24 determines whether Priority1 is used in both of the time synchronization profiles A and B. When Priority1 is used in both, the interprofile selecting part 24 causes the process to proceed to step S213. On the other hand, when Priority1 is not used at least any of these, the interprofile selecting part 24 causes the process to proceed to step S214.

At step S213, the interprofile selecting part 24 compares Priority1 between the time synchronization profiles A and B. When the time synchronization profile A is assigned with higher priority, the interprofile selecting part 24 selects the grandmaster 102 currently selected to cause the process to end. On the other hand, when the time synchronization profile B is assigned with higher priority, the interprofile selecting part 24 selects the grandmaster 102 newly selected to cause the process to end. When the time synchronization profiles have the same priority, the interprofile selecting part 24 causes the process to proceed to step S214.

Thereafter, similarly as for another item, the interprofile selecting part 24 makes a determination as to whether that item is used and makes a comparison in descending order of priority until the grandmaster 102 for use is selected. At step S214 and step S215, a determination as to whether Clockclass is used and a comparison are made. At step S216 and step S217, a determination as to whether ClockAccuracy is used and a comparison are made. At step S218 and step S219, a determination as to whether OffsetScaledLogVariance is used and a comparison are made. At step S220 and step S221, a determination as to whether Priority2 is used and a comparison are made. At step S222 and step S223, a determination as to whether ClockIdentity is used and a comparison are made.

When the grandmaster 102 for use is not selected even with the last ClockIdentity, the interprofile selecting part 24 performs error handling and causes the process to end.

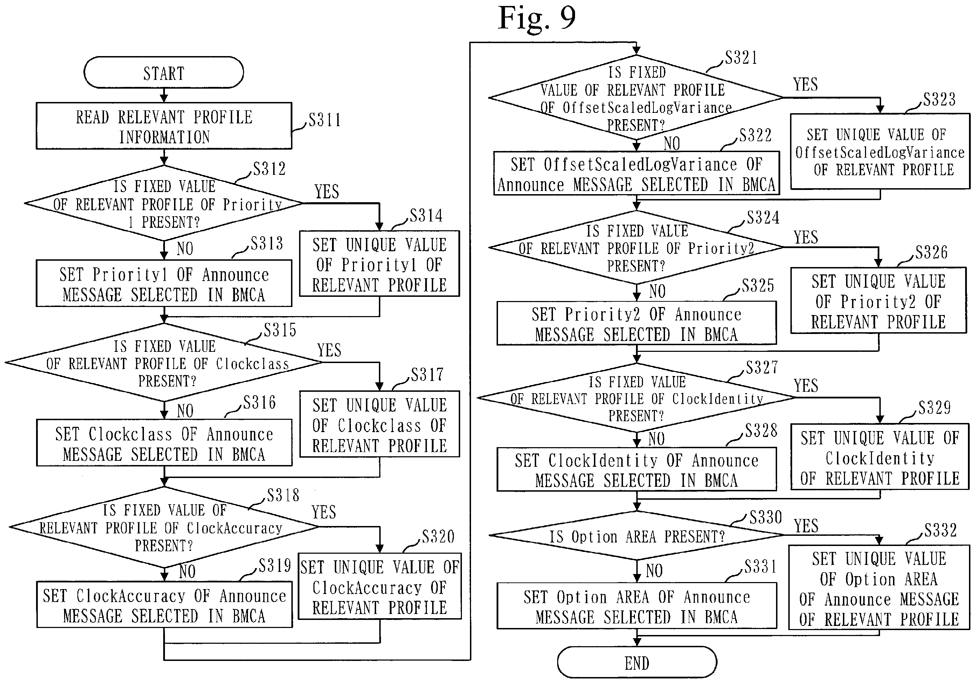

With reference to Fig. 9, the transmission process (step S14 of Fig. 3) according to Embodiment 1 is described.

In the transmission process, the interprofile selecting part 24 performs setting of transmission of an Announce message. Here, the interprofile selecting part 24 sets a value in the Announce message of the grandmaster 102 selected at step S13 and a unique value of the Announce message received at step S11. Here, the interprofile selecting part 24 sets a unique value for an item with a unique value in the time synchronization profile of the Announce message received at step S11. On the other hand, for an item without a unique value, the interprofile selecting part 24 sets the value in the Announce message of the grandmaster 102 selected at step S13.

With this, an Announce message is generated which indicates time synchronization information of the grandmaster 102 selected by the interprofile selecting part 24 and is along the time synchronization profile of the Announce message received at step S11.

At step S311, the interprofile selecting part 24 reads out the time synchronization profile of the Announce message received at step S11.

At step S312, the interprofile selecting part 24 determines for Priority1 whether the time synchronization profile of the Announce message received at step S11 has a unique value. When a unique value is not present, the interprofile selecting part 24 causes the process to proceed to step S313. On the other hand, when a unique value is present, the interprofile selecting part 24 causes the process to proceed to step S314.

At step S313, the interprofile selecting part 24 sets the value of Priority1 in the Announce message of the grandmaster 102 selected at step S13 as Priority 1. On the other hand, at step S314, the interprofile selecting part 24 sets the unique value of Priority1 in the time synchronization profile of the Announce message received at step S11 as Priority1.

Thereafter, similarly as for another item, the interprofile selecting part 24 makes a determination as to whether a unique value is present and sets an item value. At step S315 to step S317, a determination as to whether a unique value is present is made and an item value is set for Clockclass. At step S318 to step S320, a determination as to whether a unique value is present is made and an item value is set for ClockAccuracy. At step S321 to step S323, a determination as to whether a unique value is present is made and an item value is set for OffsetScaledLogVariance. At step S324 to step S326, a determination as to whether a unique value is present is made and an item value is set for Priority2. At step S327 to step S329, a determination as to whether a unique value is present is made and an item value is set for ClockIdentity. At step S330 to step S332, a determination as to whether a unique value is present is made and an item value is set for the Option area.

In the process of Fig. 3, the process when the PTP frame is an Announce message is described. There may be a case in which the PTP frame is a message other than an Announce message. In this case, the relay device 10 performs process as follows.

The relay device 10 determines whether the message includes time information of the grandmaster 102 selected as the grandmaster 102 for use. When the message includes time information of the selected grandmaster 102, based on the time information included in that message, the relay device 10 performs time synchronization process by the time synchronization processing part 23 corresponding to the time synchronization profile of that message. Also, this time synchronization processing part 23 transmits the time information included in that message to a device on a slave side and the relay device 10 of another time synchronization network 101.

Here, among the relay devices 10 of other time synchronization networks 101, the time synchronization processing part 23 makes a transmission only to a time synchronization network 101 side using a time synchronization profile with low priority. The time synchronization network 101 using the time synchronization profile with low priority is a time synchronization network other than the time synchronization network to which the selected grandmaster belongs. That is, in Fig. 1, when the selected grandmaster 102 is the grandmaster 102A, the relay device 10A transmits the time information of the grandmaster 102A to the communication device 103A and the relay device 10D. When the selected grandmaster 102 is the grandmaster 102B, the relay device 10A transmits the time information of the grandmaster 102B only to the communication device 103A.

### ***Effects of Embodiment 1***

As described above, the relay device 10 according to Embodiment 1 selects the grandmaster 102 for use in time synchronization from the grandmasters 102 in the plurality of time synchronization networks 101. Also, the relay device 10 according to Embodiment 1 converts the time synchronization information for the selected grandmaster 102 into an Announce message in a form along another time synchronization profile.

This allows the grandmaster 102 to be shared for use in the time synchronization networks 101 using different time synchronization profiles. As a result, when a plurality of time synchronization networks using different time synchronization profiles are present, it is possible to efficiently construct a time synchronization network. For example, the number of expensive grandmasters 102 can be reduced.

### ***Other structures***

### <Modification 1>

In Embodiment 1, each functional component is implemented by software. However, as Modification 1, each functional component may be implemented by hardware. Points of this Modification 1 different from Embodiment 1 are described.

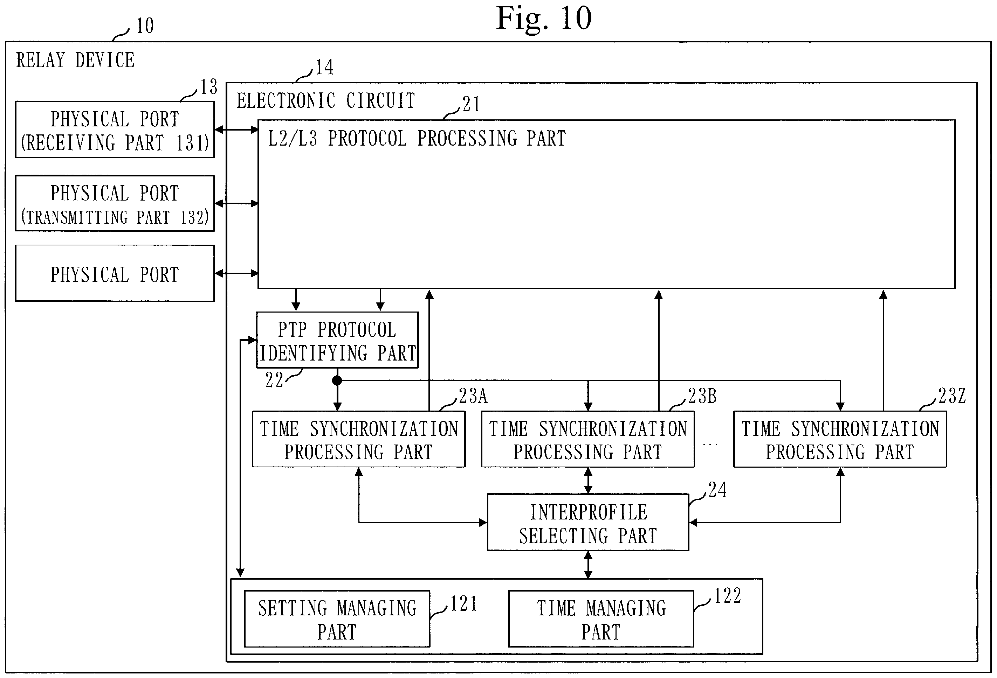

With reference to Fig. 10, the structure of the relay device 10 according to Modification 1 is described.

When each functional component is implemented by hardware, the relay device 10 includes an electronic circuit 14 instead of the processor 11 and the memory 12. The electronic circuit 14 is a dedicated circuit achieving the functions of each functional component and the memory 12.

As the electronic circuit 14, a single circuit, a composite circuit, a programmed processor, a parallel-programmed processor, a logic IC, a GA, an ASIC, or an FPGA is assumed. GA is an abbreviation of Gate Array. ASIC is an abbreviation of Application Specific Integrated Circuit. FPGA is an abbreviation of Field-Programmable Gate Array.

Each functional component may be implemented by one electronic circuit 14, or each functional component may be implemented by being distributed to a plurality of electronic circuits 14.

### <Modification 2>

As Modification 2, the functional components may be implemented partially by hardware and the other functional components may be implemented by software.

The processor 11, the memory 12, and the electronic circuit 14 are called processing circuits. That is, the function of each functional component is implemented by a processing circuit.

### Embodiment 2.

Embodiment 2 is different from Embodiment 1 in that a priority profile, which is a time synchronization profile with priority, can be set. In Embodiment 2, this different point is described and description of the same points is omitted.

When the time synchronization network 101 already laid is present, a time synchronization network 101 with a different time synchronization profile may be newly added. In this case, it can be thought that the time synchronization profile for use in the already-laid time synchronization network 101 is set as a priority profile. This allows the grandmaster 102 of the already-laid time synchronization network 101 to be always selected as the grandmaster 102 for use.

As a result, it is not required to set the grandmaster 102 in a time synchronization network 101 to be newly added. It is also not required to lay a network to the grandmaster 102 in a time synchronization network 101 to be newly added.

### ***Description of structure***

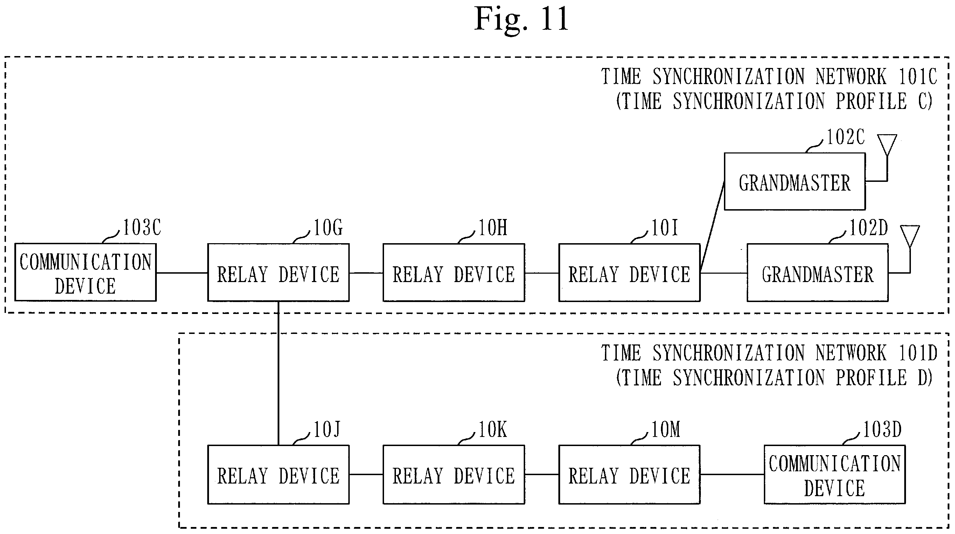

With reference to Fig. 11, the structure of the time synchronization system 100 according to Embodiment 2 is described.

In Fig. 11, the time synchronization system 100 includes a time synchronization network 101C and a time synchronization network 101D. In the time synchronization network 101C, a time synchronization profile C is used. In the time synchronization network 101D, a time synchronization profile D is used. In Fig. 11, if the time synchronization network 101C has been already laid, it is assumed that the time synchronization network 101D is newly added.

The time synchronization network 101C includes grandmasters 102C and 102D, relay devices 10G, 10H, and 10I, and a communication device 103C. The time synchronization network 101D includes relay devices 10J, 10K, and 10M and a communication device 103D. That is, the time synchronization network 101D does not include the grandmaster 102.

The relay device 10G in the time synchronization network 101C and the relay device 10J in the time synchronization network 101D are connected together.

### ***Description of operation***

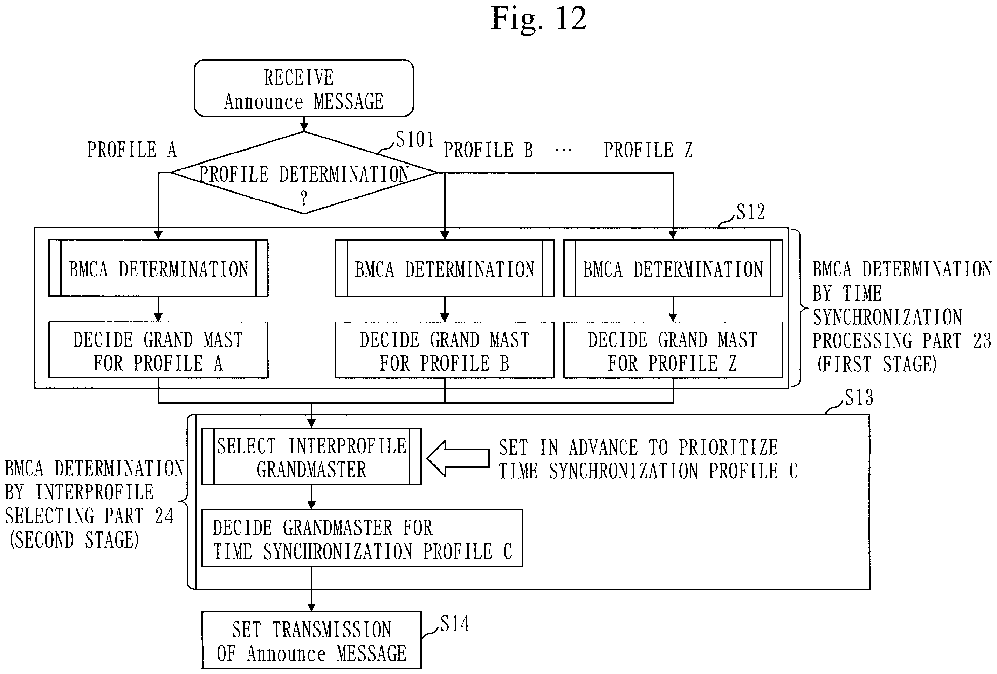

With reference to Fig. 12, the operation of the relay device 10 according to Embodiment 2 is described.

Here, it is assumed that the time synchronization profile C is set as a priority profile for the interprofile selecting part 24 of the relay device 10J.

Step S11A, step S12A, and step S14A are identical to step S11, step S12, and step S14 of Fig. 3.

### (Step S13A: Interprofile selection process)

As with step S13 of Fig. 3, based on the Announce messages in the plurality of time synchronization networks, the interprofile selecting part 24 selects the grandmaster 102 for use from the grandmasters 102 selected for the respective time synchronization profiles at step S12. That is, the interprofile selecting part 24 selects the best grandmaster 102 from the grandmasters 102 selected in the plurality of time synchronization profiles.

However, when a priority profile is set, the interprofile selecting part 24 does not make a comparison between different profiles, but selects the grandmaster 102 in the time synchronization network 101 where the priority profile is used as the grandmaster 102 for use.

The relay device 10J has the time synchronization profile C set as a priority profile. Thus, the interprofile selecting part 24 of the relay device 10J does not make a comparison between different profiles, but selects the grandmaster 102 in the time synchronization network 101C as the grandmaster 102 for use.

### ***Effects of Embodiment 2***

As described above, the relay device 10 according to Embodiment 2 can set a priority profile, which is a time synchronization profile with priority.

This allows the grandmaster 102 of the time synchronization network 101 where a specific time synchronization profile is used to be intentionally selected. For example, the time synchronization profile for use in the already-laid time synchronization network 101 is set as a priority profile. This dispenses with the grandmaster 102 and a network to the grandmaster 102 in the time synchronization network 101 to be newly added.

### Embodiment 3.

Embodiment 3 is different from Embodiment 1 in that a comparison target profile, which is a time synchronization profile as a comparison target, can be set. In Embodiment 3, this different point is described and description of the same points is omitted.

There may be a case in which demanded time accuracy varies depending on the time synchronization profile. There is a fear that the grandmaster 102 of the time synchronization network 101 where a time synchronization profile with low demanded time accuracy is used is selected. If the grandmaster 102 as described above is selected, there is a fear that demanded time accuracy cannot be satisfied.

For example, due to a failure of the grandmaster 102 or the like, a situation can occur in which even one grandmaster 102 of the time synchronization network 101 where a time synchronization profile with high demanded time accuracy is used is not connected. In this case, the grandmaster 102 of the time synchronization network 101 where a time synchronization profile with low demanded time accuracy is used is selected. Note that, in general, in each time synchronization network 101, redundancy of the grandmasters 102 is ensured. However, there is also a possibility that failures occur in all grandmasters 102 in the time synchronization network 101.

### ***Description of structure***

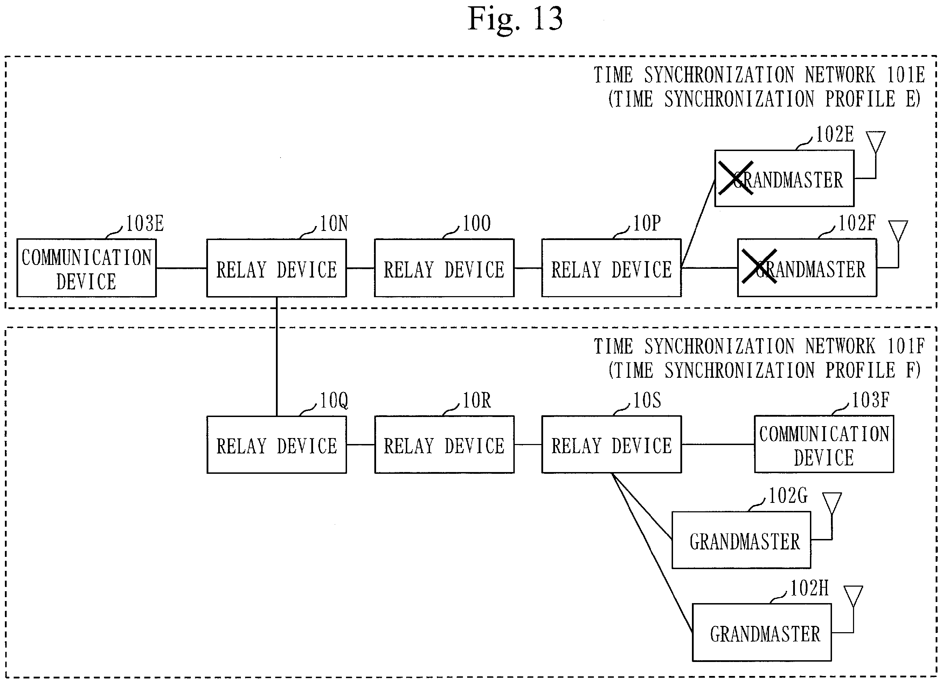

With reference to Fig. 13, the structure of the time synchronization system 100 according to Embodiment 3 is described.

In Fig. 13, the time synchronization system 100 includes a time synchronization network 101E and a time synchronization network 101F. In the time synchronization network 101E, a time synchronization profile E is used. In the time synchronization network 101F, a time synchronization profile F is used. In Fig. 13, the time synchronization network 101E is assumed to have high demanded time accuracy, compared with the time synchronization network 101F.

The time synchronization network 101E includes grandmasters 102E and 102F, relay devices 10N, 10O, and 10P, and a communication device 103E. The time synchronization network 101F includes grandmasters 102G and 102H, relay devices 10Q, 10R, and 10S, and a communication device 103F.

The relay device 10N in the time synchronization network 101E and the relay device 10Q in the time synchronization network 101F are connected together.

### ***Description of operation***

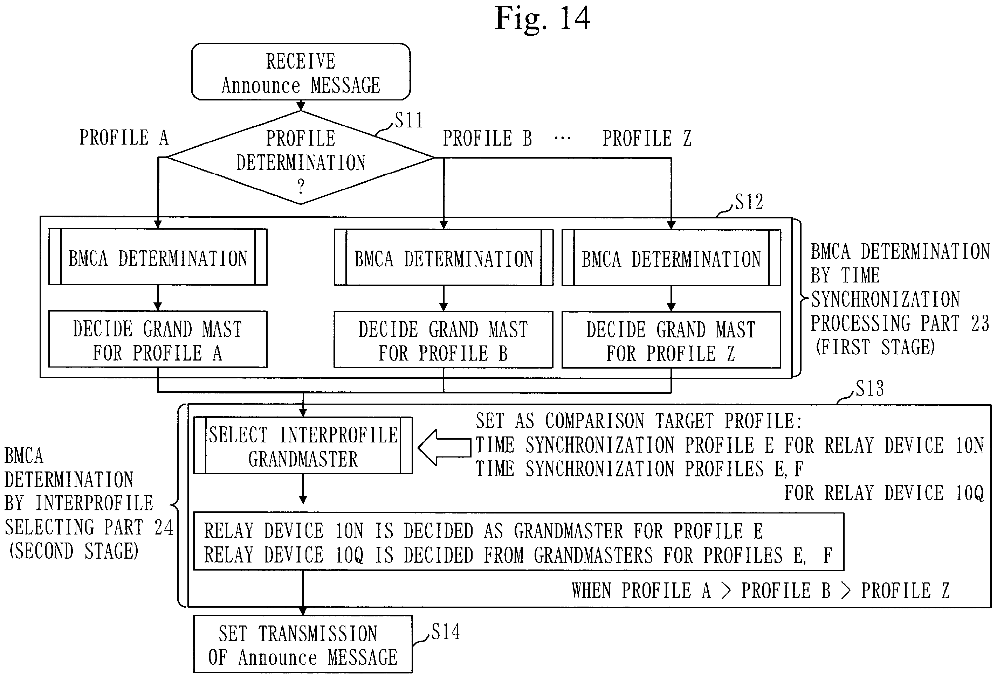

With reference to Fig. 14, the operation of the relay device 10 according to Embodiment 3 is described.

Here, it is assumed that only the time synchronization profile E is set as a comparison target profile for the interprofile selecting part 24 of the relay device 10N. It is assumed that the time synchronization profiles E and F are set as comparison target profiles for the interprofile selecting part 24 of the relay device 10Q.

Step S11B, step S12B, and step S14B are identical to step S11, step S12, and step S14 of Fig. 3.

### (Step S13B: Interprofile selection process)

As with step S13 of Fig. 3, based on the Announce messages in the plurality of time synchronization networks, the interprofile selecting part 24 selects the grandmaster 102 for use from the grandmasters 102 selected for the respective time synchronization profiles at step S12. That is, the interprofile selecting part 24 selects the best grandmaster 102 from the grandmasters 102 selected in the plurality of time synchronization profiles.

However, the interprofile selecting part 24 selects the grandmaster 102 for use from the grandmasters 102 of the time synchronization networks 101 using the time synchronization profiles set as comparison target profiles. Thus, for the relay device 10N, a comparison is not made between different profiles, and the grandmaster 102 of the time synchronization network 101E is selected. For the relay device 10Q, a comparison is made between the time synchronization networks 101E and 101F to select the grandmaster 102.

As illustrated in Fig. 13, it is assumed that a state becomes such that the grandmasters 102E and 102F included in the time synchronization network 101E are both cut off. Even in this case, the relay device 10N does not select the grandmaster 102 of the time synchronization network 101F using the time synchronization profile F with low demanded time accuracy. When no grandmaster 102 is selected, the relay device 10N self-runs until any selectable grandmaster 102 recovers.

### ***Effects of Embodiment 3***

As described above, the relay device 10 according to Embodiment 3 can set a comparison target profile, which is a time synchronization profile as a comparison target.

This allows the grandmaster 102 for use to be selected from the grandmasters 102 of the time synchronization networks 101 where a specific time synchronization profile is used. For example, a time synchronization profile for use in the time synchronization network 101 where the demanded time accuracy satisfies criteria is set as a comparison target profile. This allows time accuracy demanded in the time synchronization profile to be satisfied.

Note that "part" in the above description may be read as "circuit", "step", "procedure", "process", or "processing circuit".

In the foregoing, the embodiments and the modifications of the present disclosure have been described. Among these embodiments and modifications, several ones may be combined for implementation. Also, any one or several ones may be partially implemented. Note that the present disclosure is not limited to the above-described embodiments and modifications and can be variously changed as required.

### Reference Signs List

100: time synchronization system; 101: time synchronization network; 102: grandmaster; 103: communication device; 10: relay device; 11: processor; 12: memory; 121: setting managing part; 122: time managing part; 13: physical port; 131: receiving part; 132: transmitting part; 21: L2/L3 protocol processing part; 22: PTP protocol identifying part; 23: time synchronization processing part; 24: interprofile selecting part

## Claims

1. A relay device comprising:
a receiving part to receive time synchronization messages in a plurality of time synchronization networks using different time synchronization profiles; and
an interprofile selecting part to select a grandmaster for use in time synchronization from grandmasters in the plurality of time synchronization networks based on the time synchronization messages in the plurality of time synchronization networks received by the receiving part.

2. The relay device according to claim 1, further comprising:
a plurality of time synchronization processing parts each provided so as to correspond to each of the time synchronization profiles to transmit a time synchronization message indicating time synchronization information of the grandmaster selected by the interprofile selecting part, the time synchronization message being along a corresponding time synchronization profile.

3. The relay device according to claim 2, wherein
among the plurality of time synchronization processing parts, a time synchronization processing part corresponding to the time synchronization profile to be used in a time synchronization network to which the grandmaster selected by the interprofile selecting part belongs performs a time synchronization process based on a time of the grandmaster selected by the interprofile selecting part.

4. The relay device according to claim 2 or 3, wherein
each of the plurality of time synchronization processing parts selects a grandmaster for use from one or more grandmasters in a corresponding time synchronization network, and
the interprofile selecting part selects the grandmaster for use in time synchronization from the grandmasters selected by the plurality of time synchronization processing parts.

5. The relay device according to any one of claims 1 to 4, wherein
a priority profile, which is a time synchronization profile with priority, can be set and, when the priority profile is set, the interprofile selecting part selects, as the grandmaster for use, a grandmaster in a time synchronization network using the priority profile among the plurality of time synchronization networks.

6. The relay device according to claim 5, wherein
when a time synchronization network using a new time synchronization profile is added to an already-laid network, which is a time synchronization network already laid, a time synchronization profile for use in the already-laid network is set as the priority profile.

7. The relay device according to any one of claims 1 to 6, wherein
a comparison target profile, which is a time synchronization profile as a comparison target, can be set and when the comparison target profile is set, the interprofile selecting part selects the grandmaster for use in time synchronization from grandmasters in time synchronization networks using the comparison target profile among the plurality of time synchronization networks.

8. The relay device according to claim 7, wherein
a time synchronization profile for use in a time synchronization network in which time accuracy satisfies criteria is set as the comparison target profile.

9. A relay method comprising:
receiving, by a computer, time synchronization messages in a plurality of time synchronization networks using different time synchronization profiles; and
selecting, by the computer, a grandmaster for use in time synchronization from grandmasters in the plurality of time synchronization networks based on the time synchronization messages in the plurality of time synchronization networks.

10. A relay program that causes a computer to function as a relay device to execute:
a reception process of receiving time synchronization messages in a plurality of time synchronization networks using different time synchronization profiles; and
an interprofile selection process of selecting a grandmaster for use in time synchronization from grandmasters in the plurality of time synchronization networks based on the time synchronization messages in the plurality of time synchronization networks received by the reception process.

11. A time synchronization system comprising:
a plurality of time synchronization networks using different time synchronization profiles, wherein
at least any of the time synchronization networks among the plurality of time synchronization networks includes a relay device to receive time synchronization messages in the plurality of time synchronization networks and to select a grandmaster for use in time synchronization from grandmasters in the plurality of time synchronization networks based on the received time synchronization messages in the plurality of time synchronization networks.
